# EUROPÄISCHE PATENTANMELDUNG

(11) **EP 2 042 693 A1**
(43) Veröffentlichungstag der Anmeldung: **01.04.2009**
(21) Anmeldenummer: 09000688.3
(22) Anmeldetag: 03.04.2007
(51) Int. Cl.: F01M 11/04, F16N 31/00

(54) **Ölsammelgehäuse**

(30) Priorität: 24.05.2006 DE 102006024331
(62) Teilanmeldung aus: 07006943.0
(71) Anmelder: Bayerische Motoren Werke Aktiengesellschaft, 80809 München (DE)
(72) Erfinder: Spiess, Thomas, 81739 München (DE); Dembinski, Norbert, 81739 München (DE)

(57) **Zusammenfassung**

Ölsammelgehäuse mit einer bodenseitigen Ölwechselöffnung und einem nach innen gerichteten, die Ölwechselöffnung umschließenden Dom, in dem ein Verschluss der Ölwechselöffnung angeordnet ist, wobei der Dom im Verbindungsbereich zum Ölsammelgehäuse zum Boden des Ölsammelgehäuses zumindest annähernd bündige Durchlässe aufweist.

## Beschreibung

Die Erfindung betrifft ein Ölsammelgehäuse mit einer bodenseitigen Ölwechselöffnung und einem nach innen gerichteten, die Ölwechselöffnung umschließenden Dom, in dem ein Verschluss der Ölwechselöffnung angeordnet ist.

Viele Maschinen sind ölgeschmiert, ein regelmäßiger Wechsel des Schmieröls ist erforderlich. Hierzu umfassen solche Maschinen üblicherweise ein Ölsammelgehäuse mit Ölwechselöffnung, die mit einem Verschluss verschlossen ist. Beispielsweise ist dies bei in Kraftfahrzeugen verwendeten Brennkraftmaschinen der Fall, die im unteren Bereich ihres Maschinengehäuses eine Ölwanne mit verschließbarer bodenseitiger Öffnung aufweisen. Um eine größtmögliche Bodenfreiheit zu erreichen, ist ein Dom zur Aufnahme des Verschlusses der Ölwechselöffnung oft nach innen gerichtet. Bei einem Ölwechsel wird die Ölablassschraube geöffnet und das abfließende Altöl in einer Aufnahmeschale aufgefangen. Alternativ wird eine Absaugsonde beispielsweise über ein Ölpeilstab-Führungsrohr in das Maschinengehäuse bis zur Ölwanne eingeführt und das Altöl abgesaugt.

Beispielsweise aus der FR 2 584 967 A1 ist ein Ölsammelgehäuse mit einer bodenseitigen Ölwechselöffnung und einem nach innen gerichteten, die Ölwechselöffnung umschließenden Dom, in dem ein Verschluss der Ölwechselöffnung angeordnet ist, bekannt. Dabei ist im Verbindungsbereich zwischen Dom und Boden des Ölsammelgehäuses ein umlaufender Absatz gebildet. Nachteiligerweise kann daher altes Öl in der Regel nicht vollständig abgelassen werden und es verbleiben Schmutzpartikel im Ölsammelgehäuse. Auch beim Absaugen von Öl mittels Absaugsonde besteht die Gefahr, dass Rückstände, insbesondere Schmutzpartikel, im Ölsammelgehäuse verbleiben, da einen Ausspülung mit Spülströmung durch die Ölwechselöffnung unterbleibt und die Absaugsonde einen nur geringen Durchmesser aufweist.

Die DE 7311523 U offenbart eine Ölwanne mit einer bodenseitigen Ölwechselöffnung. Die Ölwanne weist eine geringe Wandstärke auf, zum Einschrauben eines Verschlusses der Ölwechselöffnung ist jedoch eine größere Wandstärke erforderlich, weshalb im Boden der Ölwanne ein Einsatzstück angeordnet ist, das die Ölwechselöffnung bildet und zugleich die Aufnahme des Verschlusses der Ölwechselöffnung ermöglicht. Auch bei der mit der DE 7311523 U offenbarten Anordnung ist im Verbindungsbereich zwischen Einsatzstück und Boden des Ölsammelgehäuses ein umlaufender Absatz gebildet, sodass altes Öl in der Regel nicht vollständig abgelassen werden kann und Schmutzpartikel im Ölsammelgehäuse verbleiben.

Der Erfindung liegt daher die Aufgabe zugrunde, ein eingangs genanntees Ölsammelgehäuse bereit zu stellen, das eine größtmögliche Bodenfreiheit gewährleistet und bei dem zugleich altes Öl zumindest annähernd vollständig abgelassen werden kann, sodass beim Ablassen alten Öls Rückstände und Schmutzpartikel zumindest annähernd vollständig aus dem Ölsammelgehäuse ausgespült werden.

Die Lösung der Aufgabe erfolgt mit einem Ölsammelgehäuse gemäß Anspruch 1. Besonders bevorzugte Ausgestaltungen und Weiterbildungen des erfindungsgemäßen Ölsammelgehäuses sind Gegenstand der abhängigen Ansprüche.

Das erfindungsgemäße Ölsammelgehäuse zeichnet sich dadurch aus, dass der der Ölwechselöffnung zugeordnete Verschluss zur lösbar axialfesten Verbindung mit einer Befestigungseinrichtung einer Ölwechseleinrichtung geeignet ist. Hierzu weist zweckmäßigerweise der Verschluss der Ölwechselöffnung ein mit dem Gewinde-, Bajonett-, Rast- oder Klipsverschluss der Befestigungseinrichtung der Ölwechseleinrichtung korrespondierendes Gegenstück auf. Außerdem ist der Verschluss der Ölwechselöffnung zur lösbar drehfesten Verbindung mit einer Öffnungseinrichtung der Ölwechseleinrichtung geeignet, indem er eine mit einer entsprechenden Kontur der Öffnungseinrichtung korrespondierende Kontur aufweist.

Vorzugsweise weist der Dom ein Innengewinde auf, in das ein mit einem Außengewinde versehener Verschluss verliersicher eingeschraubt ist. Die Verliersicherung ist dabei so ausgeführt, dass zwar ein Öffnen und Schließen der Ölwechselöffnung möglich ist, der Verschluss jedoch nicht unbeabsichtigt aus dem Dom entfernt werden kann.

Sehr zweckmäßig ist es, wenn der Dom als gesondertes Bauteil in einer Öffnung im Boden des Ölsammelgehäuses angeordnet ist. Diese Ausführung bietet besondere fertigungstechnische Vorteile, da an einer vorbestimmten Stelle, beispielsweise der geodätisch tiefsten Stelle, lediglich das Ölsammelgehäuse durchbrochen und in den Durchbruch der Dom mit Verschluss eingesetzt und dicht befestigt werden muss.

Nachfolgend wir ein besonders zu bevorzugendes Ausführungsbeispiel der Erfindung unter Bezugnahme auf Figuren näher erläutert, dabei zeigen schematisch und beispielhaft
- Figur 1: eine Ölwechseleinrichtung mit Befestigungseinrichtung, Öffnungseinrichtung und Öltransfereinrichtung an einem gegossenen Ölsammelgehäuse,
- Figur 2: eine Ölwechseleinrichtung mit Befestigungseinrichtung, Öffnungseinrichtung und Öltransfereinrichtung an einem Ölsammelgehäuse aus Blech,
- Figur 3a: das Anbringen einer eine Ölwechseleinrichtung mit Befestigungseinrichtung, Öffnungseinrichtung und Öltransfereinrichtung an einem Ölsammelgehäuse,
- Figur 3b: das Öffnen eines einer Ölwechselöffnung eines Ölsammelgehäuses zugeordneten Verschlusses,
- Figur 3c: das Ablassen von Öl aus einem Ölsammelgehäuse,
- Figur 4a: den Werkstatteinsatz einer Ölwechseleinrichtung unter Verwendung einer Hebeeinrichtung und
- Figur 4b: den Werkstatteinsatz einer Ölwechseleinrichtung sowie ein mit der Ölwechseleinrichtung verbundene Ölservicestation.

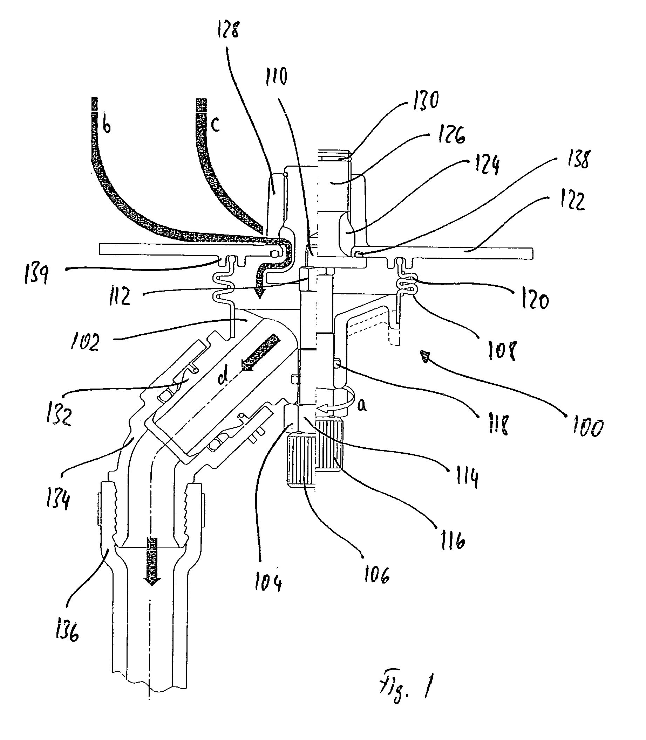

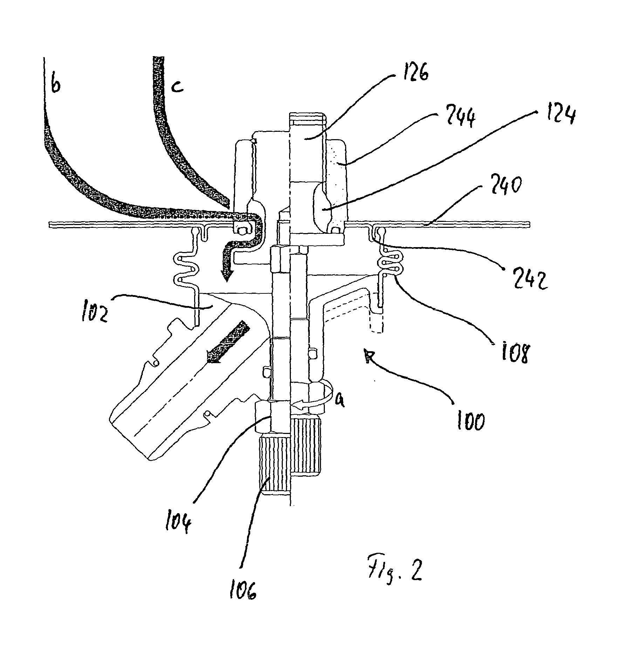

Figur 1 zeigt eine Ölwechseleinrichtung 100 mit Befestigungseinrichtung 106, Öffnungseinrichtung 104 und Öltransfereinrichtung 102 an einem gegossenen Ölsammelgehäuse 122. Eine Ölwechseleinrichtung 100 mit Befestigungseinrichtung 106, Öffnungseinrichtung 104 und Öltransfereinrichtung 102 an einem Ölsammelgehäuse 240 aus Blech ist in Figur 2 dargestellt. Gleiche Bauteile sind in den Figuren 1 und 2 mit denselben Bezugszeichen versehen. Es zeigen jeweils die rechte Zeichnungshälfte den Ölablassvorgang bei noch geschlossener Öffnungseinrichtung 104 und die linke Zeichnungshälfte den Ölablassvorgang bei bereits geöffneter Öffnungseinrichtung 104.

Die Ölwechseleinrichtung 100 umfasst eine trichterförmige Öltransfereinrichtung 102 zum Auffangen von abfließendem Öl. Die Öltransfereinrichtung 102 besteht aus einem öl- und wärmeresistenten Kunststoff und ist durchsichtig oder durchscheinend ausgeführt oder weist zumindest einen durchsichtigen oder durchscheinenden Bereich auf, so dass der Ölwechselvorgang beobachtet werden kann. Ein Stutzen am unteren Ende der Öltransfereinrichtung 102 dient zum Abführen des abfließenden Öls. Der Stutzen umfasst endseitig einen Teil 132 einer Schnellkupplung zum Anschuss eines mit dem korrespondierenden Teil 134 der Schnellkupplung versehenen Schlauchs 136. Mit dem Trichterförmigen oberen Bereich der Öltransfereinrichtung 102 ist eine Dichtung 108 zur Abdichtung gegenüber dem Ölsammelgehäuse 122, 240 beim Ölwechseln verbunden. Vorliegend ist diese Dichtung 108 schlauchabschnittförmig als Faltenbalg ausgebildet und umfasst eine Spiralfeder 120, unter deren Federkraft die Dichtung - wenn die Ölwechseleinrichtung 100 am Ölsammelgehäuse 122, 240 angesetzt ist - dicht am Ölsammelgehäuse 122, 240 anliegt und ein Toleranzausgleich möglich ist. Stattdessen kann auch die Verwendung einer gegebenenfalls profilierten Elastomerdichtung vorteilhaft sein.

Im Bereich der Achse der Öltransfereinrichtung 102 sind die Öffnungseinrichtung 104 und zu dieser innen liegend koaxial die Befestigungseinrichtung 106 angeordnet. Die Befestigungseinrichtung 106 ist zur Öffnungseinrichtung 104 und zur Öltransfereinrichtung 102 in axialer Richtung begrenzt verschiebbar und die Befestigungseinrichtung 106 und die Öffnungseinrichtung 104 sind sowohl zueinander als auch zur Öltransfereinrichtung 102 verdrehbar.

Die Öffnungseinrichtung 104 ist rohrförmig ausgebildet und weist an ihrem dem Verschluss 126 der Ölwechselöffnung 124 abgewandten Ende eine Kontur 114 zum Angriff eines Werkzeugs zum Öffnen des Verschlusses 124 auf. Vorliegend ist die Kontur 114 eine Sechskantkontur zur Aufnahme eines Schraubenschlüssels. Um einen Ölaustritt zu verhindern, ist zwischen Öltransfereinrichtung 102 und Öffnungseinrichtung 104 eine Dichtung 118 angeordnet, die in einer Innennut in der Öltransfereinrichtung 102 einsitzt. An ihrem dem Verschluss 126 der Ölwechselöffnung 124 zugeordneten Ende weist die Öffnungseinrichtung 104 eine mit einer entsprechenden Kontur des Verschlusses korrespondierende Kontur 122 auf. Vorliegend ist die Öffnungseinrichtung 104 mit einem Außensechskant versehen, mit dem sie mit einem entsprechenden Innensechskant im Verschluss 126 der Ölwechselöffnung 124 lösbar drehfest verbindbar ist. Die Öffnungseinrichtung 104 dient als Adapter und ermöglicht ein Öffnen oder Schließen des Verschlusses 126 bei aufgesetzter Ölwechseleinrichtung 100 von außen. Die Sechskantkontur 114 der Öffnungseinrichtung 104 weist vorliegend eine größere Schlüsselweite auf, als die Sechskantkontur 112, so dass der Verschluss 126 leicht geöffnet werden kann.

Die Befestigungseinrichtung 106 ist stiftförmig ausgebildet und weist an ihrem dem Verschluss 126 der Ölwechselöffnung 124 abgewandten Ende eine Kontur 116 zur manuellen Befestigung am Ölsammler 122, 240 respektive Verschluss 124 auf. Vorliegend ist die Kontur 116 eine Rändelstruktur. An ihrem dem Verschluss 126 der Ölwechselöffnung 124 zugeordneten Ende weist die Befestigungseinrichtung 106 eine mit einer entsprechenden Kontur des Verschlusses korrespondierende Kontur 110 auf. Vorliegend ist die Befestigungseinrichtung 106 mit einem Außengewinde versehen, mit dem sie in ein entsprechendes Innengewinde im Verschluss 126 der Ölwechselöffnung 124 zur lösbar axialfesten Verbindung einschraubbar ist.

Das Ölsammelgehäuse 122, 240 weist im Boden, vorzugsweise an der geodätisch tiefsten Stelle, eine Ölwechselöffnung 124 auf, die mit einem Verschluss 126 verschließbar ist. Im Inneren des Ölsammelgehäuse 122, 240 ist ein die Ölwechselöffnung 124 umgebender Dom 128, 244 vorgesehen, der im Verbindungsbereich zum Ölsammelgehäuse 122, 240 zum Boden des Ölsammelgehäuses 122, 240 zumindest annähernd bündige Durchlässe aufweist. In dem Dom 128, 244 ist der Verschluss 126 der Ölwechselöffnung 124 angeordnet. Vorliegend ist der Dom 128, 244 mit einem Innengewinde versehen, der Verschluss 126 weist ein Außengewinde auf und ist in den Dom 128, 244 eingeschraubt. Indem der Verschluss 126 im Dom 128, 244 verdreht wird, ist er entsprechend der Gewindesteigung axial verlagerbar. Im geschlossenen Zustand verschließt der Verschluss 126 die Ölwechselöffnung 124, wobei eine Dichtung 138 zwischen Verschluss 126 und Ölwechselöffnung 124 wirkt. In geöffnetem Zustand ist die Ölwechselöffnung 124 freigegeben durch eine im Verschluss 126 ausgebildete Ringnut. Auch in geöffnetem Zustand kann so der Verschluss 126 im Dom 128, 244 verliersicher verbleiben, wobei ein unbeabsichtigtes vollständiges Herausschrauben mittels eines Rings 130 am inneren Ende des Verschlusses 126 verhindert ist. Im Ausführungsbeispiel nach Figur 1 ist das Ölsammelgehäuse 122 gegossen, der Dom 128 ist als integraler Bestandteil des Ölsammelgehäuses 122 zusammen mit diesem gegossen. Außerdem ist am Boden des Ölsammelgehäuse 122 eine doppelte Ringrippe 139 zur positionsgenauen, dichten Anlage der Ölwechseleinrichtung 100 an das Ölsammelgehäuse 122 angegossen. Bei dem Ölsammelgehäuse 240 aus Blech gemäß Figur 2 ist der Dom 244 als gesondertes Bauteil in eine Öffnung im Boden des Ölsammelgehäuse 240 eingesetzt und dort dicht fixiert, beispielsweise eingeschweißt, eingelötet oder eingeklebt. Der eingesetzte Dom 240 bildet die Ölwechselöffnung 124, der Verschluss 126 dichtet gegen die Unterseite des eingesetzten Doms 240. Eine Ringrippe 242 ist durch einen entsprechend geformten Blechfalz gebildet.

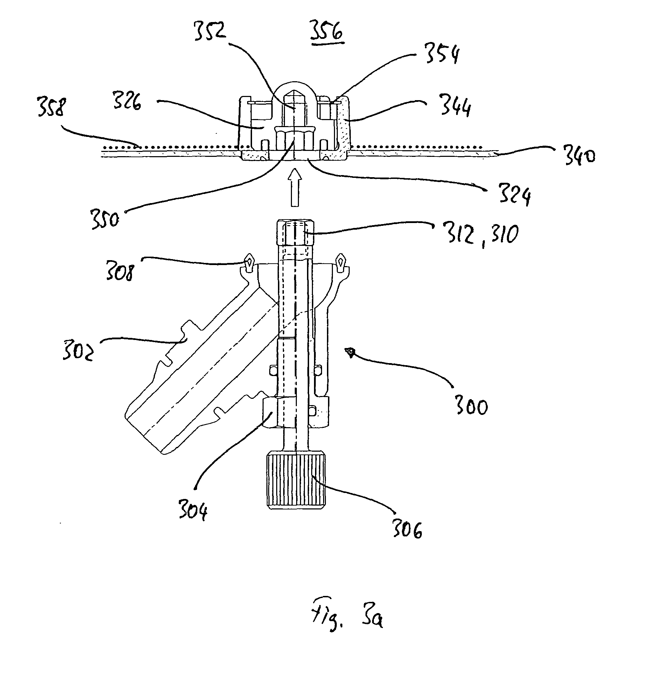

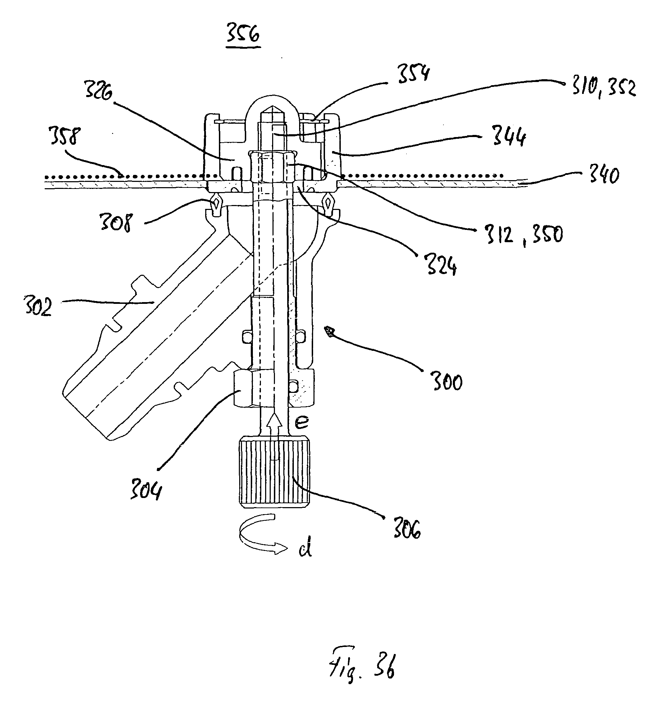

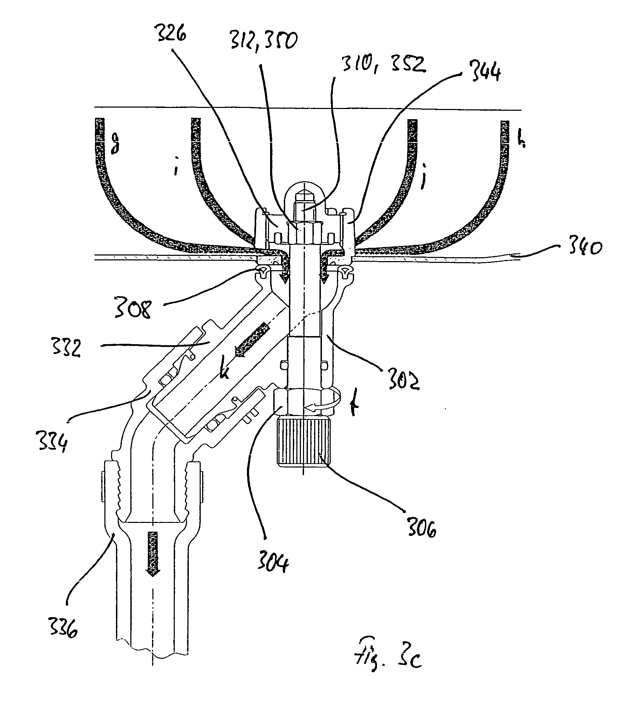

Anhand der Figuren 3a, 3b und 3c wird ein Ölwechsel beschrieben, dabei wird auch auf die Figuren 1, 2 Bezug genommen. Figur 3a zeigt das Anbringen einer Ölwechseleinrichtung 300 an einem Ölsammelgehäuse 340, das Öffnen eines einer Ölwechselöffnung 324 des Ölsammelgehäuses 340 zugeordneten Verschlusses 326 ist in Figur 3b dargestellt, Figur 3c zeigt das Ablassen von Öl aus dem Ölsammelgehäuse 340.

Ein Ölwechsel wird durchgeführt, indem die Ölwechseleinrichtung 100, 300 von unten an die Ölwechselöffnung 124, 324 des Ölsammelgehäuses 122, 240, 340 angesetzt wird, wobei gemäß Figuren 1, 2 die Dichtung 108 an der Ringrippe 139, 242 positioniert wird. Dem Ausführungsbeispiel nach Figur 3a, 3b, 3c zufolge ist die Dichtung 308 als profilierte, hohle Elastomerdichtung ausgeführt, eine Ringrippe ist nicht vorgesehen. Die Befestigungseinrichtung 106, 306 wird mit ihrem Gewinde 110, 310 manuell in das Gegengewinde 352 des geschlossenen Verschlusses 126, 326 eingeschraubt, in Figur 3b angedeutet durch die Pfeile d, e. Dabei kommt die Ölwechseleinrichtung 100, 300 zur dichten Anlage am Ölsammelgehäuse 122, 240 und die Dichtung 108, 308 entfaltet - gemäß Figuren 1, 2 unter der Kraft der Feder 120 - ihre volle Dichtwirkung. Außerdem wird auch die Öffnungseinrichtung 104, 304 mit dem Verschluss 126, 326 verbunden, indem, wie in den Figuren 3a, 3b, 3c gezeigt, die Kontur 312 der Öffnungseinrichtung 304 in die korrespondierende Kontur 350 im Verschluss 326 eingreift. In den Figuren 1, 2 ist in der rechten Zeichnungshälfte die noch unbefestigte Position gestrichelt angedeutet.

Sobald die Ölwechseleinrichtung 100, 300 mittels der Befestigungseinrichtung 106, 306 befestigt und die Öffnungseinrichtung 104, 304 mit dem Verschluss 126, 326 verbunden ist, wird mittels der Öffnungseinrichtung 104, 304 der Verschluss 126, 326 der Ölwechselöffnung 124, 324 geöffnet, indem ein Schraubenschlüssel an der Sechskantkontur 114 angesetzt und die Öffnungseinrichtung 104, 304 entsprechend der Pfeilrichtung a, f verdreht wird. Der Verschluss 126, 326 wird dabei soweit geöffnet, bis der Ring 130 am inneren Ende des Doms 128, 244 respektive der Verschluss 326 am Ring 354 zur Anlage kommt und damit eine Rückmeldung über die Vollständige Öffnung gegeben wird.

Bei geöffnetem Verschluss 126, 326 strömt im Ölsammelgehäuse 122, 240, 340 befindliches Öl 356 durch die Ölwechselöffnung 124, 324 aus. Dabei ist aufgrund der zum Boden des Ölsammelgehäuses 122, 240, 340 zumindest annähernd bündigen Durchlässe gewährleistet, dass Ölströme b, g, h Schmutzpartikel 358 am Grund des Ölsammelgehäuses 122, 240, 340 ausschwemmen: Außerdem kann Öl 358 entsprechend den Pfeilrichtungen c, i, j ausströmen, so dass ein hohes Ausströmvolumen erreicht wird. Das ausströmende Öl d, k wird in mittels der Öltransfereinrichtung 102, 302 aufgefangen abgeleitet.

Während bei den Ausführungsformen nach den Figuren 1, 2 der Verschluss 126 zum Öffnen nach außen aufgeschraubt wird, wird der Verschluss 326 bei der Ausführungsform nach Figur 3a, 3b, 3c zum Öffnen nach innen geschraubt. Die Ausführungsform gemäß Figur 3a, 3b, 3c zeigt ein Ölsammelgehäuse 340 aus Blech mit eingesetztem Dom 344. 332 bezeichnet einen der Öltransfereinrichtung 302 zugeordneten Teil einer Schnellkupplung, deren anderer Teil mit 334 bezeichnet ist. Mit 336 ist ein Schlauch bezeichnet.

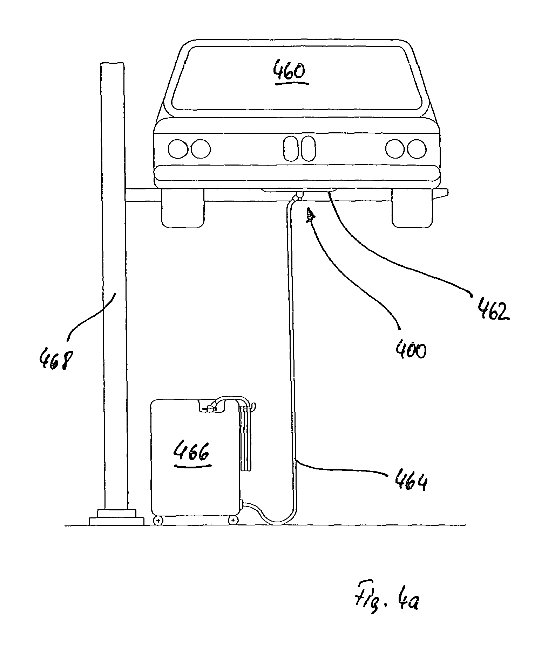

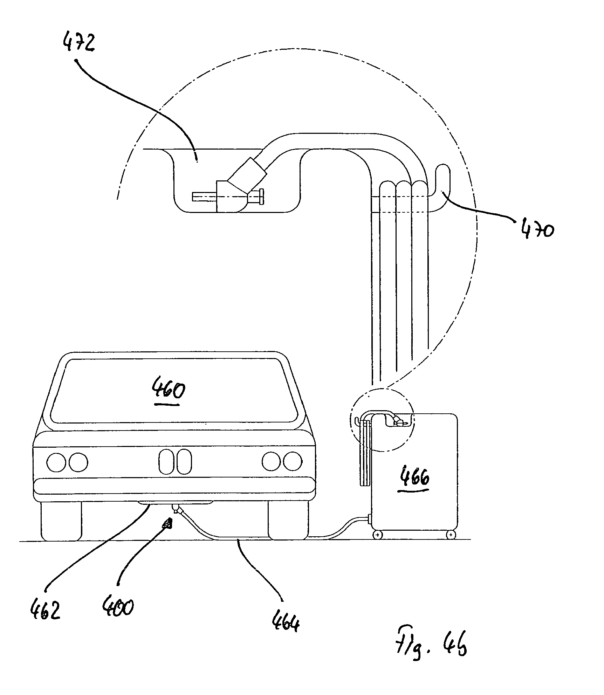

Der Werkstatteinsatz einer Ölwechseleinrichtung 400 mit einer Ölservicestation 466 ist mit den Figuren 4a, 4b. Gemäß Figur 4a erfolgt ein Ölwechsel bei mittels einer Hebeeinrichtung 468 angehobenem Fahrzeug 460, während nach Figur 4b ein Anheben des Fahrzeugs 460 nicht erforderlich ist. In beiden Darstellungen ist die Ölwechseleinrichtung 400 mit dem Ölsammelgehäuse 462 verbunden. Die Ölservicestation 466 weist eine Aufnahme 470 für einen Schlauch 464 und eine weitere Aufnahme 472 zur Ablage der Ölwechseleinrichtung 400 auf, wenn diese nicht benutzt wird. Vorliegend ist die Aufnahme 470 hakenförmig und die Aufnahme 472 muldenförmig im Gehäuse der Ölservicestation 466 ausgebildet. Die Aufnahme 472 ermöglicht eine tropffreie Ablage der Ölwechseleinrichtung 400 und kann gegebenenfalls mit einem eigenen Ablauf versehen sein, do dass eine Ansammlung von Öl in der Aufnahme 472 vermieden wird.

Mit der erfindungsgemäßen Ölwechseleinrichtung 100, 300, 400 kann Öl sowohl passiv abgelassen werden, indem das Öl schwerkraftbedingt abläuft als auch aktiv abgesaugt werden. Außerdem kann mit der erfindungsgemäßen Ölwechseleinrichtung 100, 300, 400 eine Befüllung des Ölsammelgehäuses 122, 240, 340, 462 mit Öl erfolgen. Die erforderliche Ölmenge kann dabei einfach und schnell genau bemessen werden, da gegenüber einer herkömmlichen Befüllung von oben nicht abgewartet werden muss, bis sich das frisch eingefüllt Öl im Ölsammelgehäuse 122, 240, 340, 462 gesammelt hat. Die erfindungsgemäße Ölwechseleinrichtung 100, 300, 400 eignet sich darüber hinaus überaus gut zur teilweisen oder vollständigen Automatisierung der Ölwechselvorganges, eine Bemessung der einzufüllenden Ölmenge kann dabei bereits durch die Ölservicestation 466 vorgenommen werden. Einer etwaige Überfüllung kann verlustfrei korrigiert werden.

## Patentansprüche

1. Ölsammelgehäuse (122, 240, 340, 464) mit einer bodenseitigen Ölwechselöffnung (124, 324) und einem nach innen gerichteten, die Ölwechselöffnung (124, 324) umschließenden Dom (128, 344), in dem ein Verschluss (126, 326) der Ölwechselöffnung (124, 324) angeordnet ist, **dadurch gekennzeichnet, dass** der Dom (128, 344) im Verbindungsbereich zum Ölsammelgehäuse (122, 240, 340, 464) zum Boden des Ölsammelgehäuses (122, 240, 340, 464) zumindest annähernd bündige Durchlässe aufweist.

2. Ölsammelgehäuse (122, 240, 340, 464) nach Anspruch 1, **dadurch gekennzeichnet, dass** der der Ölwechselöffnung (124, 324) zugeordnete Verschluss (126, 326) zur lösbar axialfesten Verbindung mit einer Befestigungseinrichtung (106, 306) einer Ölwechseleinrichtung (100, 300, 400) geeignet ist.

3. Ölsammelgehäuse (122, 240, 340, 464) nach einem der Ansprüche 1-2, **dadurch gekennzeichnet, dass** der Verschluss (126, 326) der Ölwechselöffnung (124, 324) ein mit einem Gewinde-, Bajonett-, Rast- oder Klipsverschluss der Befestigungseinrichtung (106, 306) der Ölwechseleinrichtung (100, 300, 400) korrespondierendes Gegenstück (352) aufweist.

4. Ölsammelgehäuse (122, 240, 340, 464) nach einem der Ansprüche 1-3, **dadurch gekennzeichnet, dass** der Verschluss (126, 326) der Ölwechselöffnung (124, 324) zur lösbar drehfesten Verbindung mit einer Öffnungseinrichtung (104, 304) der Ölwechseleinrichtung (100, 300, 400) geeignet ist.

5. Ölsammelgehäuse (122, 240, 340, 464) nach einem der Ansprüche 1-4, **dadurch gekennzeichnet, dass** der Verschluss (126, 326) der Ölwechselöffnung (124, 324) eine mit einer entsprechenden Kontur (112, 312) der Öffnungseinrichtung (104, 304) korrespondierende Kontur (350) aufweist.

6. Ölsammelgehäuse (122, 240, 340, 464) nach einem der Ansprüche 1-5, **dadurch gekennzeichnet, dass** der Dom (128, 344) ein Innengewinde aufweist, in das ein mit einem Außengewinde versehener Verschluss (126, 326) verliersicher eingeschraubt ist.

7. Ölsammelgehäuse (240, 340) nach einem der Ansprüche 1-6, **dadurch gekennzeichnet, dass** der Dom (128, 344) als gesondertes Bauteil in einer Öffnung im Boden des Ölsammelgehäuses (240, 340) angeordnet ist.
